# EUROPEAN PATENT SPECIFICATION

(11) **EP 3 058 201 B1**
(45) Date of publication and mention of the grant of the patent: **18.07.2018**
(21) Application number: 14854071.9
(22) Date of filing: 23.05.2014
(51) Int. Cl.: F02C 7/24, F02C 7/14, F23R 3/42, F23R 3/28

(54) **COMBUSTOR WALL HAVING COOLING ELEMENT(S) WITHIN A COOLING CAVITY**
BRENNKAMMERWAND MIT KÜHLELEMENT(EN) IN EINEM KÜHLHOHLRAUM
PAROI DE CHAMBRE DE COMBUSTION AYANT UN OU PLUSIEURS ÉLÉMENTS DE REFROIDISSEMENT DANS UNE CAVITÉ DE REFROIDISSEMENT

(30) Priority: 18.10.2013 US 201361892883 P
(43) Date of publication of application: 24.08.2016
(73) Proprietor: United Technologies Corporation, Farmington, CT 06032 (US)
(72) Inventor: CUNHA, Frank J., Avon, Connecticut 06001 (US); KOSTKA, JR., Stanislav, Northbridge, MA 01534 (US)
(74) Representative: Dehns
(86) International application number: PCT/US2014/039382
(87) International publication number: WO 2015/057272

(56) References cited:
- EP-A2- 2 541 147
- EP-A2- 2 562 479
- GB-A- 2 356 042
- US-A- 5 353 865
- US-A1- 2005 262 844
- US-A1- 2008 145 211
- US-A1- 2009 293 488
- US-A1- 2010 095 679
- US-A1- 2010 242 487
- US-A1- 2013 055 722

## Description

### BACKGROUND OF THE INVENTION

### 1. Technical Field

This disclosure relates generally to a turbine engine and, more particularly, to a combustor for a turbine engine.

### 2. Background Information

A floating wall combustor for a turbine engine typically includes a bulkhead that extends radially between inner and outer combustor walls. Each of the combustor walls includes a shell and a heat shield, which defines a radial side of a combustion chamber. Cooling cavities extend radially between the heat shield and the shell. These cooling cavities fluidly couple impingement apertures in the shell with effusion apertures in the heat shield.

There is a need in the art for an improved turbine engine combustor.

EP 2562479 A2 discloses an arrangement having the features of the preamble of claim 1.

### SUMMARY OF THE DISCLOSURE

According to an aspect of the invention, a combustor wall is provided for a turbine engine, as claimed in claim 1. Further developments of the invention can be taken from the dependent claims.

The foregoing features and the operation of the invention will become more apparent in light of the following description and the accompanying drawings.

### BRIEF DESCRIPTION OF THE DRAWINGS

FIG. 1 is a side cutaway illustration of a geared turbine engine;
FIG. 2 is a side cutaway illustration of a portion of a combustor section;
FIG. 3 is a perspective illustration of a portion of a combustor;
FIG. 4 is a perspective illustration of a portion of a combustor wall;
FIG. 5 is a side sectional illustration of a portion of the combustor wall;
FIG. 6 is another side sectional illustration of a portion of the combustor wall;
FIG. 7 is an illustration of a heat shield panel;
FIG. 8 is another side sectional illustration of a portion of the combustor wall;
FIG. 9 is a side sectional illustration of a portion of an alternate embodiment combustor wall;
FIG. 10 is a side sectional illustration of a portion of an alternate embodiment combustor wall; and
FIG. 11 is a side sectional illustration of a portion of an alternate embodiment combustor wall.

### DETAILED DESCRIPTION OF THE INVENTION

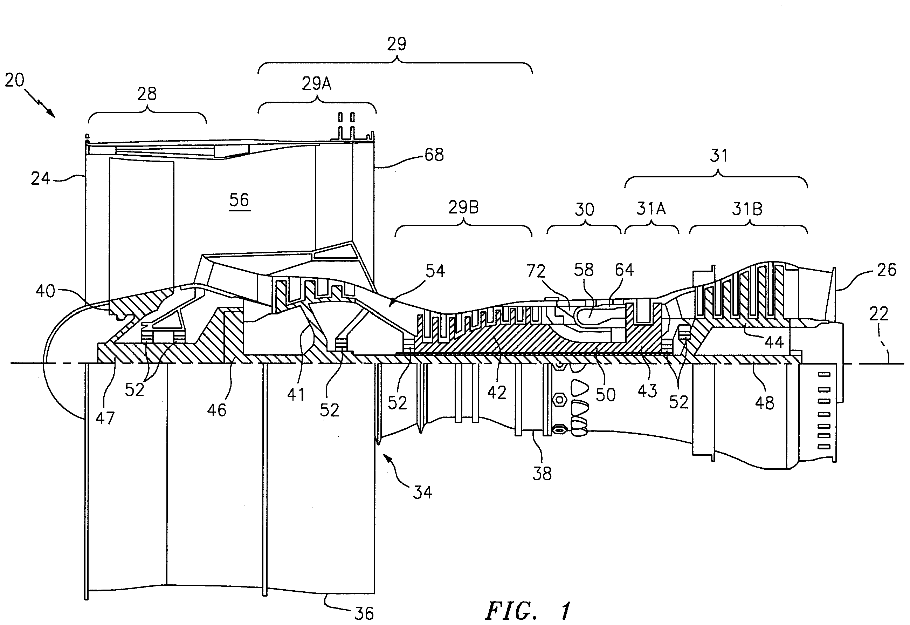

FIG. 1 is a side cutaway illustration of a geared turbine engine 20. This turbine engine 20 extends along an axial centerline 22 between an upstream airflow inlet 24 and a downstream airflow exhaust 26. The turbine engine 20 includes a fan section 28, a compressor section 29, a combustor section 30 and a turbine section 31. The compressor section 29 includes a low pressure compressor (LPC) section 29A and a high pressure compressor (HPC) section 29B. The turbine section 31 includes a high pressure turbine (HPT) section 31A and a low pressure turbine (LPT) section 31B. The engine sections 28-31 are arranged sequentially along the centerline 22 within an engine housing 34, which includes a first engine case 36 (e.g., a fan nacelle) and a second engine case 38 (e.g., a core nacelle).

Each of the engine sections 28, 29A, 29B, 31A and 31B includes a respective rotor 40-44. Each of the rotors 40-44 includes a plurality of rotor blades arranged circumferentially around and connected to (e.g., formed integral with or mechanically fastened, welded, brazed, adhered or otherwise attached to) one or more respective rotor disks. The fan rotor 40 is connected to a gear train 46 (e.g., an epicyclic gear train) through a shaft 47. The gear train 46 and the LPC rotor 41 are connected to and driven by the LPT rotor 44 through a low speed shaft 48. The HPC rotor 42 is connected to and driven by the HPT rotor 43 through a high speed shaft 50. The shafts 47, 48 and 50 are rotatably supported by a plurality of bearings 52. Each of the bearings 52 is connected to the second engine case 38 by at least one stator such as, for example, an annular support strut.

Air enters the turbine engine 20 through the airflow inlet 24, and is directed through the fan section 28 and into an annular core gas path 54 and an annular bypass gas path 56. The air within the core gas path 54 may be referred to as "core air". The air within the bypass gas path 56 may be referred to as "bypass air".

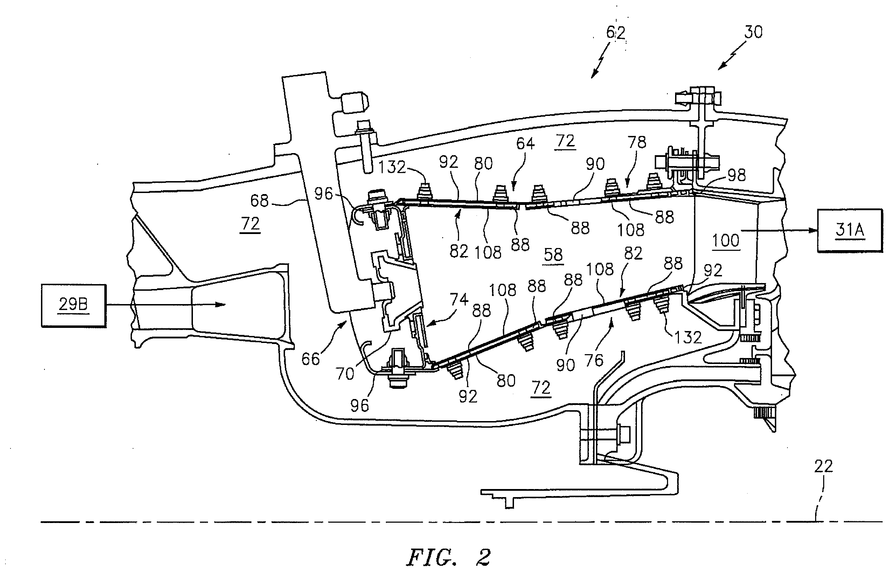

The core air is directed through the engine sections 29-31 and exits the turbine engine 20 through the airflow exhaust 26. Within the combustor section 30, fuel is injected into an annular combustion chamber 58 (see also FIG. 2) and mixed with the core air. This fuel-core air mixture is ignited to power the turbine engine 20 and provide forward engine thrust. The bypass air is directed through the bypass gas path 56 and out of the turbine engine 20 through a bypass nozzle 60 to provide additional forward engine thrust. Alternatively, the bypass air may be directed out of the turbine engine 20 through a thrust reverser to provide reverse engine thrust.

FIG. 2 illustrates an assembly 62 of the turbine engine 20. This turbine engine assembly 62 includes a combustor 64. The turbine engine assembly 62 also includes one or more fuel injector assemblies 66, each of which may include a fuel injector 68 mated with a swirler 70.

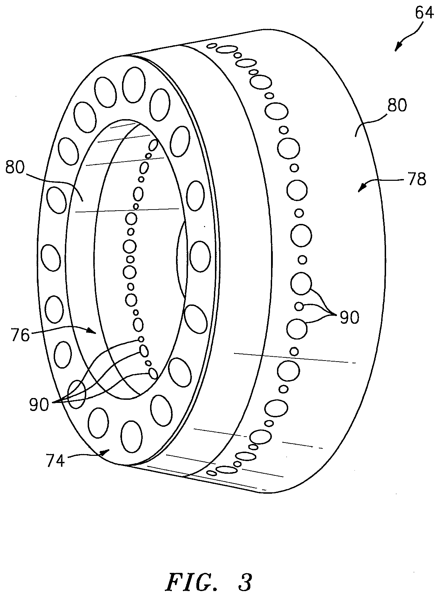

The combustor 64 may be configured as an annular floating wall combustor, which may be arranged within an annular plenum 72 of the combustor section 30. The combustor 64 of FIGS. 2 and 3, for example, includes an annular combustor bulkhead 74, a tubular combustor inner wall 76, and a tubular combustor outer wall 78. The bulkhead 74 extends radially between and is connected to the inner wall 76 and the outer wall 78. The inner wall 76 and the outer wall 78 each extends axially along the centerline 22 from the bulkhead 74 towards the turbine section 31A, thereby defining the combustion chamber 58.

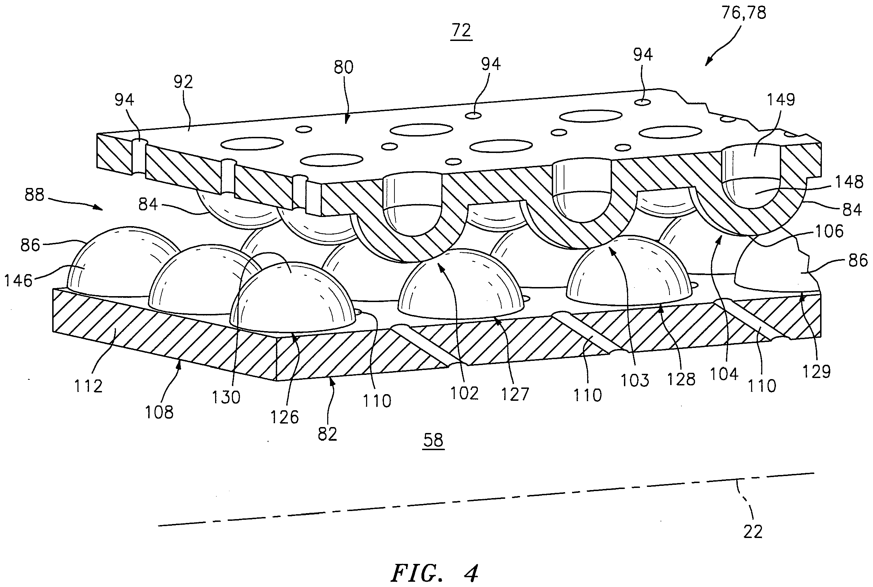

Referring to FIG. 2, the inner wall 76 and the outer wall 78 may each have a multi-walled structure; e.g., a hollow dual-walled structure. The inner wall 76 and the outer wall 78 of FIG. 2, for example, each includes a tubular combustor shell 80, a tubular combustor heat shield 82, and one or more cooling elements 84 and 86 (see FIG. 4). The inner wall 76 and the outer wall 78 also each include one or more cooling cavities 88 (e.g., impingement cavities) and one or more quench apertures 90, which are arranged circumferentially around the centerline 22.

Referring to FIG. 4, the shell 80 includes a shell base 92, one or more of the cooling elements 84, and one or more cooling apertures 94. Referring now to FIG. 2, the shell base 92 extends axially along the centerline 22 between an upstream end 96 and a downstream end 98. The shell base 92 is connected to the bulkhead 74 at the upstream end 96. The shell base 92 may be connected to a stator vane assembly 100 or the HPT section 31A at the downstream end 98.

Referring to FIG. 4, the cooling elements 84 are formed integral with, or may be attached to, the shell base 92. The cooling elements 84 may be arranged into one or more axial sets (e.g., sets 102-104). These axial sets (e.g., sets 102-104) are respectively arranged at discrete locations along the centerline 22. Each axial set (e.g., each set 102-104) includes an array of one or more of the cooling elements 84, which elements are arranged circumferentially around the centerline 22. Each of the cooling elements 84 may radially extend partially into a respective one of the cooling cavities 88 from the shell base 92 to a distal end 106.

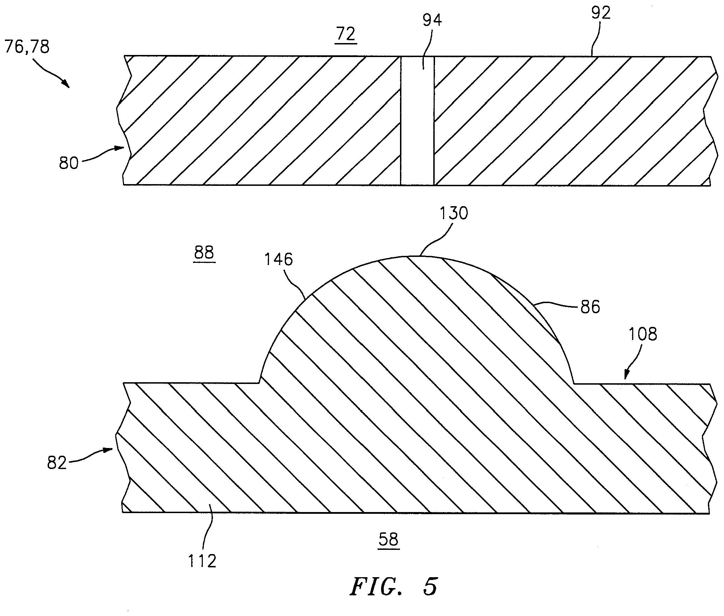

Referring to FIGS. 4 and 5, one or more of the cooling apertures 94 may each be configured as an impingement aperture. Each cooling aperture 94, for example, may direct core air from the plenum 72 into a respective one of the cooling cavities 88 to impinge against a respective one of the cooling elements 86 to cool the heat shield 82. One or more of the cooling apertures 94 may each be aligned axially and/or circumferentially between respective adjacent cooling elements 86; e.g., approximately centered between a cluster of (e.g., four) respecting cooling elements 86.

Referring to FIG. 2, the heat shield 82 extends axially along the centerline 22 between an upstream end and a downstream end. The heat shield 82 may include one or more heat shield panels 108 (e.g., arcuate shaped panels). These panels 108 may be arranged into one or more axial sets. Each of the axial sets is arranged at discrete locations along the centerline 22. The panels 108 in each set are disposed circumferentially around the centerline 22 and form a hoop. Alternatively, the heat shield 82 may be configured from one or more tubular bodies.

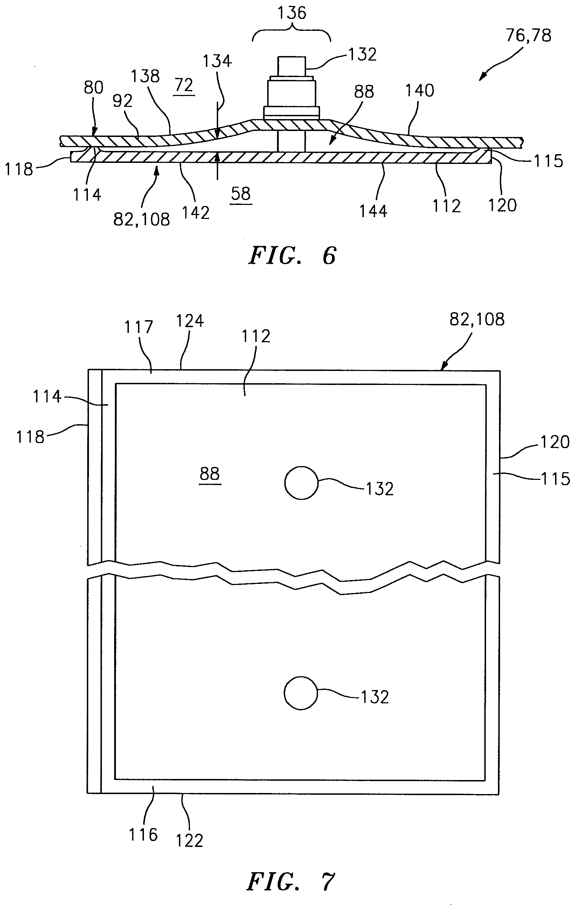

FIGS. 6 and 7 illustrate an exemplary one of the panels 108. It should be noted that each panel 108 may include one or more of the cooling elements 86 and one or more cooling apertures 110 (see FIG. 4) as described below in further detail. For ease of illustration, however, the panel 108 of FIGS. 6 and 7 is shown without the cooling elements 86 and the cooling apertures 110.

Each of the panels 108 includes a panel base 112 and one or more rails 114-117. The panel base 112 may be configured as a generally curved (e.g., arcuate) plate. The panel base 112 extends axially between an upstream axial end 118 and a downstream axial end 120. The panel base 112 extends circumferentially between opposing circumferential ends 122 and 124.

Each of the rails 114-117 extends radially out from (or in from) the panel base 112 relative to the centerline 22. The rail 116 is arranged at (e.g., on, adjacent or proximate) the circumferential end 122. The rail 117 is arranged at the circumferential end 124. Each of the rails 114 and 115 extends circumferentially between and is connected to the rails 116 and 117. The rail 114 is arranged at the upstream end 118. The rail 115 is arranged at the downstream end 120.

Referring to FIG. 4, one or more of the panels 108 also each includes one or more of the cooling elements 86 and one or more of the cooling apertures 110 as described above. The cooling elements 86 may be arranged into one or more axial sets (e.g., sets 126-129). These axial sets (e.g., sets 126-129) are respectively arranged at discrete locations along the centerline 22. Each axial set (e.g., each set 126-129) includes an array of one or more of the cooling elements 86, which elements are arranged circumferentially around the centerline 22. Each of the cooling elements 86 may radially extend partially into a respective one of the cooling cavities 88 from the panel base 112 to a distal end 130. Referring to FIGS. 4 and 5, one or more of the cooling elements 86 may each be aligned axially and/or circumferentially with a respective one of the cooling apertures 94. One or more of the cooling elements 86 may each be aligned axially and/or circumferentially between respective adjacent cooling elements 84; e.g., approximately centered between a cluster of (e.g., four) respecting cooling elements 84.

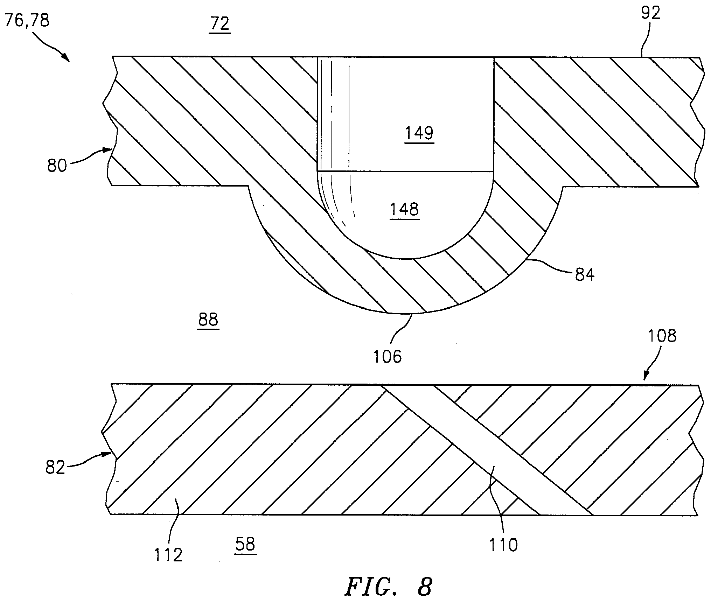

Referring to FIGS. 4 and 8, one or more of the cooling apertures 110 may each be configured as an effusion aperture. Each cooling aperture 110, for example, may direct core air from a respective one of the cooling cavities 88 into the combustion chamber 58 to film cool the heat shield 82; e.g., to film cool the panel 108 of the heat shield 82. One or more of the cooling apertures 110 may each be aligned axially and/or circumferentially with a respective one of the cooling elements 84. One or more of the cooling apertures 110 may each be aligned axially and/or circumferentially (e.g., diagonally) between respective adjacent cooling elements 86; e.g., approximately centered between a cluster of (e.g., four) respecting cooling elements 86.

Referring to FIG. 2, the heat shield 82 of the inner wall 76 circumscribes the shell 80 of the inner wall 76, and defines a radially inner side of the combustion chamber 58. The heat shield 82 of the outer wall 78 is arranged radially within the shell 80 of the outer wall 78, and defines a radially outer side of the combustion chamber 58 that is opposite the inner side.

The heat shield 82 and, more particularly, each of the panels 108 may be respectively attached to the shell 80 by a plurality of mechanical attachments 132 (e.g., threaded studs). The shell 80 and the heat shield 82 thereby respectively form the cooling cavities 88 in each of the walls 76, 78.

The cooling cavities 88 maybe arranged into one or more axial sets. These axial sets are respectively arranged at discrete locations along the centerline 22. Each axial set includes an array of one or more of the cooling cavities 88, which cavities are arranged circumferentially around the centerline 22 (e.g., at a common axial extent). Referring to FIG. 4, each of the cooling cavities 88 fluidly couples one or more of the cooling apertures 94 with one or more of the cooling apertures 110.

Referring to FIG. 7, each cooling cavity 88 extends circumferentially between the rails 116 and 117 of a respective one of the panels 108. Each cooling cavity 88 extends axially between the rails 114 and 115 of a respective one of the panels 108.

Referring to FIG. 6, each cooling cavity 88 extends radially between the shell 80 and the panel base 112 of a respective one of the panels 108, thereby defining a height 134 (e.g., a radial height) of the cooling cavity 88. In the embodiment of FIG. 6, the height 134 changes (e.g., decreases) along an axial upstream direction, from a mid-region 136 of the panel to the rail 114. The height 134 also changes (e.g., decreases) along an axial downstream direction, from the mid-region 136 to the rail 115. The height 134 at the rails 114 and 115, for example, may be less than the height 134 in the mid-region 136; e.g., between about one half (1/2) and about one sixteenth (1/16) of the height 134 in the mid-region 136. This cooling cavity 88 therefore has a double tapered sectional geometry. One or more of the cooling cavities 88, of course, may alternatively each have a single tapered sectional geometry, or a non-tapered sectional geometry (i.e., a substantially constant height).

The cooling cavity 88 tapered geometry is defined by axial portions 138 and 140 of the shell 80 and axial portions 142 and 144 of the heat shield 82. These portions 138, 140, 142 and 144 of the shell 80 and the heat shield 82 respectively radially converge towards one another as each respective panel 108 extends axially away from the mid-region 136. Each shell portion 138 and 140, for example, has a curvilinear (e.g., an elliptical, parabolic or logarithmic) sectional geometry that extends radially towards a respective one of the heat shield portions 142 and 144, which each have a substantially flat sectional geometry.

Referring to FIGS. 4 and 5, core air from the plenum 72 is directed into each cooling cavity 88 through the respective cooling apertures 94 during turbine engine operation. This core air (e.g., cooling air) may impinge against one or more of the cooling elements 86 (and/or the panel base 112) and thereby impingement cool the heat shield 82. For example, thermal energy may be transferred from the cooling elements 86 into the cooling air, which may cause the cooling elements 86 to conductively draw thermal energy out of the panel base 112. The cooling air may subsequently flow axially and/or circumferentially within the cooling cavity 88. The axially flowing cooling air may be accelerated by the tapered sectional geometry of the cooling cavity 88 as it flows towards one or more of the rails 114 and 115 (see FIGS. 6 and 7). The axially and/or circumferentially flowing cooling air may pass over one or more of the cooling elements 86, which may transfer thermal energy into the cooling air as well as turbulate the cooling air. In this manner, the core air within the cooling cavity 88 may also convectively cool the heat shield 82. Referring to FIGS. 4 and 8, the core air within each cooling cavity 88 is subsequently directed through the respective cooling apertures 110 into the combustion chamber 58 to film cool a downstream portion of the heat shield 82.

FIGS. 5 and 8-11 illustrate various cooling element 84, 86 configurations. Some of these cooling element configurations are described below and/or illustrated with respect to one of the cooling elements 86. Some of the cooling element configurations are described below and/or illustrated with respect to one of the cooling elements 84. It should be noted, however, that one or more of the cooling elements 84 may have similar configurations as those described below and/or illustrated with respect to the cooling elements 86, and vice versa.

The cooling element 86 of FIG. 5 is configured as a solid positive dimple. The term "positive dimple" may describe a discrete point protrusion (e.g., bump) with a generally parti-spherical (e.g., hemispherical), conical, convex, or cubical geometry. Each cooling element 86 of FIGS. 4 and 5, for example, has a hemispherical geometry with a circular cross-section. A positive dimple, however, may alternatively have a solid or annular geometry with a non-circular cross-section such as, for example, an elliptical cross-section, an oval cross-section, a rectangular cross-section, etc. Referring again to FIG. 5, the cooling element 86 has an outer surface 146 with a convex sectional geometry. The cooling element 86 extends partially into the cooling cavity 88 to a relatively blunt tip at the distal end 130.

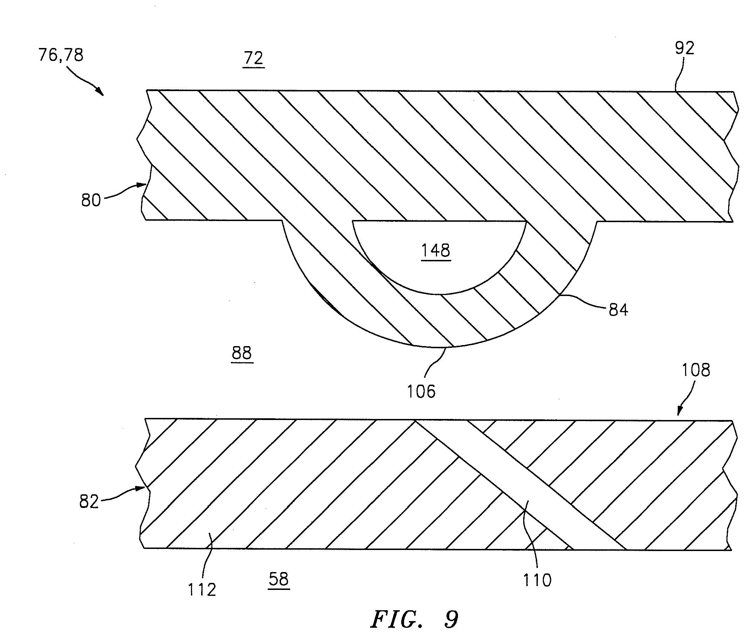

The cooling element 84 of FIG. 8 is configured as a hollow positive dimple. For example, referring to FIGS. 4 and 8, each cooling element 84 has a generally hemispherical wall that defines an interior space 148 in communication with a through-hole 149 in the shell 80; e.g., the space 148 is fluidly coupled with the plenum 72 by the through-hole 149. The cross-section of the cooling element 84 may be annular (e.g., ring shaped) and may have a circular geometry. Alternatively, the through-hole 149 may be omitted such that the interior space 148 (e.g., a cavity) is fluidly isolated from the plenum 72 by the shell base 92 as illustrated in FIG. 9.

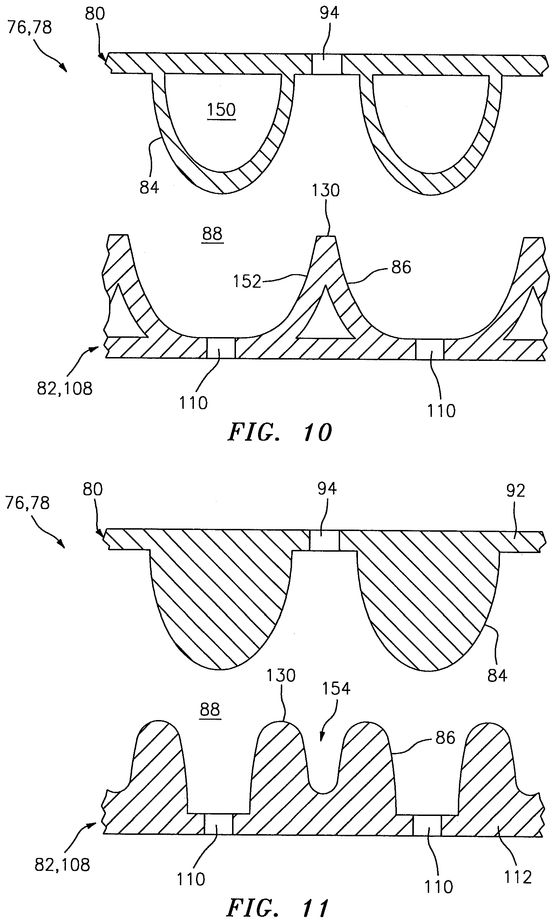

Each cooling element 86 of FIG. 10 is configured as a hollow positive dimple. Each cooling element 86 has a generally conical wall that defines a fluidly isolated interior space 150. The cross-section of the cooling element 86 may be annular and may have a circular geometry. Each cooling element 86 has an outer surface 152 with a concave (e.g., parabolic) sectional geometry. Each cooling element 86 extends partially into the cooling cavity 88 to a relatively sharp tip (e.g., a pointed tip) at the distal end 130.

Each cooling element 86 of FIG. 11 is configured as a solid positive dimple. Each cooling element 86 has a generally tapered tubular wall that defines an indentation 154, which is fluidly coupled with the cavity 88. The cross-section of the cooling element 86 may be annular and may have a circular geometry. The indentation 154 extends partially into (or through) the cooling element 86 from the distal end 130. The indentation 154 may be aligned substantially co-axial with a respective one of the cooling apertures 94. The surface defining the indentation 154 increases the overall surface area of the cooling element 86, and may increase a turbulating effect of the cooling element 86 on the core air flowing through the cooling cavity 88.

While the various cooling element 84, 86 configurations are described above, the combustor 64 may also or alternatively include one or more of cooling elements with various configurations other than those described above and illustrated in the drawings. For example, in some embodiments, the cooling elements 86 of FIG. 10 maybe solid and the cooling elements 86 of FIG. 11 may be hollow. In some embodiments, the outer surface 152 of the cooling element 86 of FIG. 10 may have a straight or convex sectional geometry. In some embodiments, one or more of the cooling elements 84 and/or 86 may each be configured as a rib (e.g., a rail or turbulating strip). This rib may have similar outer surface configurations, etc. as the positive dimples described above and illustrated in the drawings except for being elongated; e.g., its length is more than 2 times its width. In some embodiments, some of the cooling elements 84 and/or 86 may have different heights. For example, radial heights of the cooling elements 86 and 88 to their distal ends 106 and 130 may respectively increase as the respective cooling cavity 88 tapers (or expands). The present invention therefore is not limited to any particular cooling element configurations.

The shell 80 and/or the heat shield 82 may each have a configuration other than that described above. In some embodiments, for example, one or more of the shell portions 138 and 140 (see FIG. 6) may each have a substantially flat sectional geometry, and one or more of the heat shield portions 142 and 144 may each have a curvilinear sectional geometry that extends radially towards the respective shell portions 138 and 140. In some embodiments, both the shell portions 138 and 140 and the heat shield portions 142 and 144 may have curvilinear sectional geometries that extend radially toward one another. In some embodiments, the shell portions 138 and 140 and/or the heat shield portions 142 and 144 may have non-curvilinear sectional geometries that extend radially toward one another. In some embodiments, each panel may define one or more additional cooling cavities with the shell 80. The present invention therefore is not limited to any particular combustor wall configurations.

In some embodiments, the bulkhead 74 may also or alternatively be configured with a multi-walled structure (e.g., a hollow dual-walled structure) similar to that described above with respect to the inner wall 76 and the outer wall 78. The bulkhead 74, for example, may include a shell, a heat shield, one or more cooling elements, and one or more cooling cavities.

The terms "upstream", "downstream", "inner" and "outer" are used to orientate the components of the turbine engine assembly 62 and the combustor 64 described above relative to the turbine engine 20 and its centerline 22. However, one or more of these components may be utilized in other orientations than those described above. The present invention therefore is not limited to any particular spatial orientations.

The turbine engine assembly 62 may be included in various turbine engines other than the one described above. The turbine engine assembly 62, for example, may be included in a geared turbine engine where a gear train connects one or more shafts to one or more rotors in a fan section, a compressor section and/or any other engine section. Alternatively, the turbine engine assembly 62 may be included in a turbine engine configured without a gear train. The turbine engine assembly 62 may be included in a geared or non-geared turbine engine configured with a single spool, with two spools (e.g., see FIG. 1), or with more than two spools. The turbine engine may be configured as a turbofan engine, a turbojet engine, a propfan engine, or any other type of turbine engine. The present invention therefore is not limited to any particular types or configurations of turbine engines.

## Claims

1. A combustor wall for a turbine engine, the combustor wall comprising:
a shell (80) defining a first set of apertures (94);
a heat shield (82) defining a second set of apertures (110); and
a cooling element (86) extending between the shell (80) and the heat shield (82) within a tapered cooling cavity (88) defined between the shell (80) and the heat shield (82), wherein the cooling element (86) extends from the heat shield (82);
wherein the tapered cavity (88) is fluidly coupled with the first and the second sets of apertures (94, 110) and the cooling element (86) is thermally coupled to one of the shell (80) and the heat shield (82);
**characterised in that** the combustor wall further comprises a second cooling element (84) that extends into the cooling cavity from the shell (80).

2. The combustor wall of claim 1, wherein the cooling element (86) comprises a positive dimple, or a rib.

3. The combustor wall of claim 1 or 2, wherein the cooling element (86) includes a concave outer surface (152) extending within the cooling cavity (88), or the cooling element (86) includes a convex outer surface (152) extending within the cooling cavity (88).

4. The combustor wall of claim 1, 2 or 3, wherein the cooling element (86) includes a wall defining an indentation (154).

5. The combustor wall of any preceding claim, wherein the first set of apertures (94) includes an impingement aperture adapted to direct air into the cooling cavity (88) to impinge against the cooling element (86).

6. The combustor wall of any preceding claim, further comprising:
a third cooling element which extends into the cooling cavity (88) from the shell (80);
wherein the cooling element (86) is positioned opposite and between the second (84) and the third cooling elements.

7. The combustor wall of any preceding claim, further comprising:
wherein the second set of apertures (110) include an aperture positioned opposite and between the cooling element (86) and the second cooling element (84).

8. The combustor wall of any preceding claim, wherein
the cooling cavity (88) extends radially between the shell (80) and the heat shield (82); and
the cooling element (84) extends radially into the cooling cavity (88).

9. The combustor wall of any preceding claim, wherein the shell (80) and the heat shield (82) are configured to couple to a combustor bulkhead (74) at an upstream end thereof.

10. A combustor for a turbine engine, the combustor comprising the combustor wall of claim 1, wherein the heat shield (82) is attached to the shell (80).

11. The combustor of claim 10, further comprising:
a plurality of additional cooling elements;
wherein the cooling element (86) and each of the additional cooling elements extends a respective height into the cooling cavity (88), and the respective heights of the cooling elements vary along the shell (80) and the heat shield (82).

12. The combustor of claim 10 or 11, further comprising:
a first combustor wall;
wherein the shell (80), the heat shield (82) and the cooling element (86) are included within a combustor second wall, and the first and the second combustor walls are configured to be coupled a combustor bulkhead (74).

13. The combustor wall or combustor of any preceding claim, wherein the tapered cooling cavity (88) includes a tapered portion defined by respective portions of the shell (80) and the heat shield (82) that converge toward one another.

14. The combustor wall of any of claims 10 to 13, wherein the first set of apertures (94) includes an impingement aperture configured to direct air into the cooling cavity (88) to impinge against the cooling element (86).

## Patentansprüche

1. Brennkammerwand für einen Turbinenmotor, wobei die Brennkammerwand Folgendes umfasst:
eine Hülle (80), die einen ersten Satz von Öffnungen (94) definiert;
ein Hitzeschild (82), das einen zweiten Satz von Öffnungen (110) definiert; und
ein Kühlelement (86), das sich zwischen der Hülle (80) und dem Hitzeschild (82) innerhalb eines konischen Kühlhohlraums (88), der zwischen der Hülle (80) und dem Hitzeschild (82) definiert ist, erstreckt, wobei sich das Kühlelement (86) vom Hitzeschild (82) erstreckt;
wobei der konische Kühlraum (88) fluidisch mit dem ersten und dem zwischen Satz von Öffnungen (94, 110) gekoppelt ist und das Kühlelement (86) thermisch an eines der Hülle (80) und des Hitzeschildes (82) gekoppelt ist;
**dadurch gekennzeichnet, dass** die Brennkammerwand ferner ein zweites Kühlelement (84) umfasst, das sich von der Hülle (80) in den Kühlhohlraum erstreckt.

2. Brennkammerwand nach Anspruch 1, wobei das Kühlelement (86) eine positive Vertiefung oder eine Rippe umfasst.

3. Brennkammerwand nach Anspruch 1 oder 2, wobei das Kühlelement (86) eine konkave Außenfläche (152) beinhaltet, die sich innerhalb des Kühlhohlraums (88) erstreckt, oder das Kühlelement (86) eine konvexe Außenfläche (152) beinhaltet, die sich innerhalb des Kühlhohlraums (88) erstreckt.

4. Brennkammerwand nach Anspruch 1, 2 oder 3, wobei das Kühlelement (86) eine Wand beinhaltet, die eine Einkerbung (154) definiert.

5. Brennkammerwand nach einem vorhergehenden Anspruch, wobei der erste Satz von Öffnungen (94) eine Aufprallöffnung beinhaltet, die angepasst ist, um Luft in den Kühlhohlraum (88) zu leiten, um auf das Kühlelement (86) aufzutreffen.

6. Brennkammerwand nach einem vorhergehenden Anspruch, ferner umfassend:
ein drittes Kühlelement, das sich von der Hülle (80) in den Kühlhohlraum (88) erstreckt;
wobei das Kühlelement (86) gegenüber und zwischen dem zweiten (84) und dem dritten Kühlelement positioniert ist.

7. Brennkammerwand nach einem vorhergehenden Anspruch, ferner umfassend:
wobei der zweite Satz von Öffnungen (110) eine Öffnung beinhaltet, die gegenüber und zwischen dem Kühlelement (86) und dem zweiten Kühlelement (84) positioniert ist.

8. Brennkammerwand nach einem vorhergehenden Anspruch, wobei
der Kühlhohlraum (88) sich radial zwischen der Hülle (80) und dem Hitzeschild (82) erstreckt; und
das Kühlelement (84) sich radial in den Kühlhohlraum (88) erstreckt.

9. Brennkammerwand nach einem vorhergehenden Anspruch, wobei die Hülle (80) und das Hitzeschild (82) dazu konfiguriert sind, sich an einen Brennkammerschott (74) an einem sich stromaufwärts befindlichen Ende davon zu koppeln.

10. Brennkammer für einen Turbinenmotor, wobei die Brennkammer die Brennkammerwand nach Anspruch 1 umfasst, wobei das Hitzeschild (82) an der Hülle (80) befestigt ist.

11. Brennkammer nach Anspruch 10, ferner umfassend:
eine Vielzahl von zusätzlichen Kühlelementen;
wobei das Kühlelement (86) und jedes der zusätzlichen Kühlelemente sich eine entsprechende Höhe in den Kühlhohlraum (88) erstrecken und die entsprechenden Höhen der Kühlelemente entlang der Hülle (80) und dem Hitzeschild (82) variieren.

12. Brennkammer nach Anspruch 10 oder 11, ferner umfassend:
eine erste Brennkammerwand;
wobei die Hülle (80), das Hitzeschild (82) und das Kühlelement (86) innerhalb einer zweiten Brennkammerwand enthalten sind und die erste und zweite Brennkammerwand dazu konfiguriert sind, an einen Brennkammerschott (74) gekoppelt zu werden.

13. Brennkammerwand oder Brennkammer nach einem vorhergehenden Anspruch, wobei der konische Kühlhohlraum (88) einen konischen Abschnitt beinhaltet, der durch entsprechende Abschnitte der Hülle (80) und des Hitzeschildes (82), die zueinander zusammenlaufen, definiert ist.

14. Brennkammerwand nach einem der Ansprüche 10 bis 13, wobei der erste Satz von Öffnungen (94) eine Aufprallöffnung beinhaltet, die dazu konfiguriert ist, Luft in den Kühlhohlraum (88) zu leiten, um auf das Kühlelement (86) aufzutreffen.

## Revendications

1. Paroi de chambre de combustion d'un moteur à turbine, la paroi de chambre de combustion comprenant :
une enveloppe (80) définissant un premier ensemble d'ouvertures (94) ;
un bouclier thermique (82) définissant un deuxième ensemble d'ouvertures (110) ; et
un élément de refroidissement (86) s'étendant entre l'enveloppe (80) et le bouclier thermique (82) à l'intérieur d'une cavité de refroidissement conique (88) définie entre l'enveloppe (80) et le bouclier thermique (82), dans laquelle l'élément de refroidissement (86) s'étend depuis le bouclier thermique (82) ;
dans laquelle la cavité conique (88) est couplée de manière fluidique aux premier et deuxième ensembles d'ouvertures (94, 110) et l'élément de refroidissement (86) est couplé de manière thermique à l'un de l'enveloppe (80) et du bouclier thermique (82) ;
**caractérisé en ce que** la paroi de chambre de combustion comprend en outre un deuxième élément de refroidissement (84) qui s'étend dans la cavité de refroidissement depuis l'enveloppe (80).

2. Paroi de chambre de combustion selon la revendication 1, dans laquelle l'élément de refroidissement (86) comprend une dépression positive, ou une nervure.

3. Paroi de chambre de combustion selon la revendication 1 ou 2, dans laquelle l'élément de refroidissement (86) comprend une surface extérieure concave (152) s'étendant à l'intérieur de la cavité de refroidissement (88), ou l'élément de refroidissement (86) comprend une surface extérieure convexe (152) s'étendant à l'intérieur de la cavité de refroidissement (88).

4. Paroi de chambre de combustion selon la revendication 1, 2 ou 3, dans laquelle l'élément de refroidissement (86) comprend une paroi définissant une dentelure (154).

5. Paroi de chambre de combustion selon une quelconque revendication précédente, dans laquelle le premier ensemble d'ouvertures (94) comprend une ouverture par contact conçue pour diriger l'air dans la cavité de refroidissement (88) pour empiéter sur l'élément de refroidissement (86).

6. Paroi de chambre de combustion selon une quelconque revendication précédente, comprenant en outre :
un troisième élément de refroidissement qui s'étend dans la cavité de refroidissement (88) depuis l'enveloppe (80) ;
dans laquelle l'élément de refroidissement (86) est positionné en face des deuxième (84) et troisième éléments de refroidissement et entre ceux-ci.

7. Paroi de chambre de combustion selon une quelconque revendication précédente, comprenant en outre :
dans laquelle le deuxième ensemble d'ouvertures (110) comprend une ouverture positionnée en face de l'élément de refroidissement (86) et du deuxième élément de refroidissement (84) et entre ceux-ci.

8. Paroi de chambre de combustion selon une quelconque revendication précédente, dans laquelle
la cavité de refroidissement (88) s'étend radialement entre l'enveloppe (80) et le bouclier thermique (82) ; et
l'élément de refroidissement (84) s'étend radialement dans la cavité de refroidissement (88).

9. Paroi de chambre de combustion selon une quelconque revendication précédente, dans laquelle l'enveloppe (80) et le bouclier thermique (82) sont conçus pour être couplés à une cloison de chambre de combustion (74) à une extrémité en amont de celle-ci.

10. Chambre de combustion d'un moteur à turbine, la chambre de combustion comprenant la paroi de chambre de combustion selon la revendication 1, dans laquelle le bouclier thermique (82) est fixé à l'enveloppe (80).

11. Chambre de combustion selon la revendication 10, comprenant en outre :
une pluralité d'éléments de refroidissement supplémentaires ;
dans laquelle l'élément de refroidissement (86) et chacun des éléments de refroidissement supplémentaires s'étendent à une hauteur respective dans la cavité de refroidissement (88), et les hauteurs respectives des éléments de refroidissement varient le long de l'enveloppe (80) et du bouclier thermique (82) .

12. Chambre de combustion selon la revendication 10 ou 11, comprenant en outre :
une première paroi de chambre de combustion ;
dans laquelle l'enveloppe (80), le bouclier thermique (82) et l'élément de refroidissement (86) sont inclus à l'intérieur d'une deuxième paroi de chambre de combustion, et les première et deuxième parois de chambre de combustion sont configurées pour être couplées à une cloison de chambre de combustion (74).

13. Paroi de chambre de combustion ou chambre de combustion selon une quelconque revendication précédente, dans laquelle la cavité de refroidissement conique (88) comprend une partie conique définie par des parties respectives de l'enveloppe (80) et du bouclier thermique (82) qui convergent les unes vers les autres.

14. Paroi de chambre de combustion selon l'une quelconque des revendications 10 à 13, dans laquelle le premier ensemble d'ouvertures (94) comprend une ouverture par contact conçue pour diriger l'air dans la cavité de refroidissement (88) pour empiéter sur l'élément de refroidissement (86).
